# EUROPEAN PATENT APPLICATION

(11) **EP 0 903 580 A1**
(43) Date of publication of application: **24.03.1999**
(21) Application number: 98907189.9
(22) Date of filing: 12.03.1998
(51) Int. Cl.: G01N 30/64, G01N 27/30

(54) **LIQUID CHROMATOGRAPHY ELECTROCHEMICAL DETECTOR, LIQUID CHROMATOGRAPH, AND ANALYZING METHOD USING THE CHROMATOGRAPH**

(30) Priority: 14.03.1997 JP 61318/97
(71) Applicant: SHISEIDO COMPANY LIMITED, Chuo-ku, Tokyo 104-8010 (JP)
(72) Inventor: KIMURA, Tomohiko, Shiseido Research Center (1), Yokohama-shi, Kanagawa 223-8553 (JP); SHIROTA, Osamu, Shiseido Research Center (1), Yokohama-shi, Kanagawa 223-8553 (JP)
(74) Representative: Waldren, Robin Michael
(86) International application number: JP9801031
(87) International publication number: WO9841856

(57) **Abstract**

An electrochemical detector for liquid chromatography is usable in an organic solvent by suppressing the adsorption of impurities on the working electrode surface and by providing a sufficient protection to the electrode body in the reference electrode. Thus, in an electrochemical detector for liquid chromatograph forming a three-pole potentiostat and including a reference electrode 2, a working electrode 3 and an opposing electrode 4, the reference electrode 2 constituting said three-pole potentiostat includes: an electrode body 11; an inner sleeve 16 protecting therein said electrode body; and an outer sleeve 20 accommodating therein said inner sleeve, the inner sleeve 16 accommodating therein the electrode body 11 together with an electrolyte solution, the outer sleeve 20 accommodating therein said inner sleeve 16 together with an electrolyte solution, the reference electrode 2 thereby having a dual structure in which said electrode body 11 is protected double-fold by two electrolyte solution layers and two sleeves, the working electrode 3 changing an electric potential thereof periodically according to a program function of an electronic circuit 10 of the apparatus to which the working electrode is connected.

## Description

### TECHNICAL FIELD

The present invention relates to a detector for use in liquid chromatography and a liquid chromatograph, and more particularly to an electrochemical detector for use in a liquid chromatograph for electrochemically detecting the status of specimen separation by using an electrode process, and a liquid chromatograph using such a detector.

### PRIOR ART

Chromatography is one of the powerful means of separating and analyzing a complex mixture.

While the art of chromatography includes various methods, there is a common feature of using two spaces, one is a so-called mobile phase which moves continuously and the other is a fixed phase which is fixed and does not move. The specimen to be analyzed or to be separated is introduced into the mobile phase and the specimen thus introduced is caused to move, together with the mobile phase, through the fixed phase when viewed macroscopically. Microscopically, the specimen is moved while contacting with the surface of the member forming the fixed phase.

During such a process, the components included in the specimen mixture are moved through the fixed phase with respective, different velocities due to the difference in the affinity of the components to the fixed phase. For example, the components having a stronger affinity are moved with a smaller velocity.

As a result of this, the specimen mixture is decomposed into individual components as the specimen mixture is moved through the fixed phase. Thus, by comparing the time needed for a given unknown specimen to move through the fixed phase with a corresponding time of a standard specimen, it is possible to identify the component in the specimen. Thereby, the specimen mixture is separated and analyzed.

The art of chromatography is classified into several types according to the combination of the mobile phase and fixed phase, wherein there is a method called liquid chromatography that uses a solvent, which dissolves the specimen, for the mobile phase. The liquid chromatography is applicable to wide variety of specimens and is used extensively as an effective method of chemical analysis.

It should be noted that liquid chromatography is further classified, according to the type of the fixed phase, into a liquid-solid chromatography and a liquid-liquid chromatography, wherein the phrase "liquid chromatography" is generally used for indicating the liquid-solid chromatography.

In liquid chromatography, a liquid chromatograph is used, wherein a liquid chromatograph generally includes: a separation part formed of a column in which porous packing particles are filled as a fixed phase; a pumping part for feeding a solvent to the separation part as a mobile phase; and a detection part for detecting the status of separation of a specimen achieved by the separation part, wherein the porous particles carriy out the separation of the specimen as it is caused to move therethrough together with the solvent.

In such a liquid chromatograph, it has been the primary target to increase the resolution of detection by improving the performance of the separation part. In these days, on the other hand, there is a strong demand also for increased sensitivity so that substances existing with extremely low concentration level are detected successfully.

Currently, one of the following four different detectors is used in the detection part of a liquid chromatograph:
(1) an absorptiometer that detects the status of specimen separation based on the difference in the ultraviolet absorption of the components in the specimen;
(2) a fluorescent detector that detects the status of specimen separation based on the difference in the fluorescence of the components in the specimen;
(3) an electrochemical detector that detects the status of specimen separation based on the difference in the electrochemistry of the components in the specimen; and
(4) a differential refractometer that detects the status of specimen separation based on the measurement of differential refractive index of the specimen.

Among others, the use of electrochemical detector is spreading rapidly particularly in the field of trace analysis of sugars or biological substances due to the high selectivity of the electrochemical detectors.

It should be noted that electrochemical detector is a detector that measures the electrode process current produced at the time of oxidation reaction or reduction reaction of an electrochemically active substance on the electrode surface and includes the type that uses an amperometry detector and the type that uses a coulometric detector.

While both of these detectors use an electrode process occurring on the electrode surface usually at a fixed potential level, the coulometric detector has a drawback in that it is necessary to increase the surface area of the electrode in order to achieve a near 100% efficiency of electrolysis. Thus, the coulometric detector suffers from the problem of poor S/N ratio.

In the amperometry detector, on the other hand, a detection with a higher sensitivity is possible as compared with the coulometric detector, although the efficiency of electrolysis may be still low in the electrodes or cells having a small surface area. Thus, the amperometry detector is generally used for the analysis of biological substances in which substances with extremely low concentration level has to be analyzed.

In the description hereinafter, it is assumed that the phrase "electrochemical detector" indicates such an amperometry detector.

As mentioned above, an electrochemical detector has a preferable feature of high selectivity and high sensitivity. On the other hand, an electrochemical detector also has several drawbacks.

In the analysis of an electrochemically active material by causing an oxidation reaction or a reduction reaction under a constant electrical potential, it is necessary to maintain the working electrode, on which the electrode process is to be caused, at a constant voltage level.

On the other hand, it is inevitable that the working electrode collects thereon trace amount of electrochemically active impurities (metallic ions or other organic impurity ions, or anions subjected to oxidation-reduction reaction) by adsorption, and the like, when the oxidation-reduction reaction is conducted for a long time.

When this occurs, the oxidation reaction or reduction reaction of the specimen to be analyzed on the surface of the working electrode is impeded by the adsorbed impurities, and it is no longer possible to supply a sufficient electrical potential to the specimen to be analyzed. As a result, the sensitivity of detection is deteriorated.

Thus, it is important to suppress the adversary effect of the adsorbed impurities and further to suppress the adsorption of the impurities on the working electrode as much as possible.

Further, it should be noted that the solvent to be used for the mobile phase has to have an excellent electrical conductivity in order to have a satisfactory reaction on the electrode. In order to achieve this, it is necessary to use a polar solvent having a sufficient salt concentration level. The liquid chromatography that uses such a polar solvent includes so-called reversed phase liquid chromatography mode and ion-exchange chromatography mode, wherein these liquid chromatography modes are different in the mechanism of interaction between the fixed phase and the specimen to be analyzed, and hence the difference in the packing material.

In the liquid chromatography of the foregoing modes, the electrochemical detector has been used in combination with an aqueous mobile phase.

On the other hand, the selection of the mobile phase has to be made in view of the specimen to be analyzed or separated, just as in the case of conventional reversed phase liquid chromatography or ion-exchange chromatography. For example, it may be necessary to optimize the separation of the specimen by controlling the polarity of the solvent, while such an optimization may include a process of changing the polarity during the separation process.

Usually, such a control of polarity of the solvent is achieved by adding, to water used as a mobile phase, a highly polar organic solvent soluble to water such as methanol or acetonitrile.

On the other hand, the use of such an organic solvent for the solvent of the mobile phase causes a stability problem, when combined with the use of a conventional electrochemical detector, in the result of the analysis in that the base line of the chromatogram obtained as a result of the chromatography of the specimen tends to be fluctuated. Because of this reason, the use of such an electrochemical detector has been difficult in the art of liquid chromatography.

The reason of the foregoing problem is attributed to the organic solvent that reaches the electrode body of the reference electrode. When this occurs, the function of the reference electrode used as a standard electrode is seriously impaired.

Thus, it is necessary to avoid the influence of organic solvent in the mobile phase from reaching the reference electrode.

Accordingly, it is an object of the present invention to provide a novel electrochemical detector for liquid chromatography and a liquid chromatograph using such an electrochemical detector wherein the foregoing problems are eliminated.

Another object of the present invention is to provide an electrochemical detector for liquid chromatography and a liquid chromatograph using such an electrochemical detector, the electrochemical detector having a working electrode and a reference electrode, wherein the problem of interfere on the electrode process taking place on the surface of the working electrode by impurity ions is effectively suppressed, by suppressing the adsorption of the impurity ions on the working electrode surface, and wherein the use of a mobile phase containing a large amount of organic solvent is enabled.

### DISCLOSURE OF THE INVENTION

The invention according to claim 1 provides:
an electrochemical detector for liquid chromatograph, said electrochemical detector forming a three-pole potentiostat including a reference electrode, a working electrode and an opposing electrode,
said reference electrode constituting said three-pole potentiostat including: an electrode body; an inner sleeve protecting therein said electrode body; and an outer sleeve accommodating therein said inner sleeve, said inner sleeve accommodating therein said electrode body together with an electrolyte solution, said outer sleeve accommodating therein said inner sleeve together with an electrolyte solution, said reference electrode thereby having a dual structure in which said electrode body is protected double-fold by two electrolyte solution layers and two sleeves;
said working electrode changing an electric potential thereof periodically according to a program function of an electronic circuit of said apparatus to which said working electrode is connected.

The invention according to claim 2 describes:
an electrochemical detector for liquid chromatography, comprising:
a reference electrode providing a reference electrode potential;
a working electrode acting directly on a substance subjected to an electrolytic reaction;
an opposing electrode assisting said electrolytic reaction;
a cell supporting thereon said reference electrode, said working electrode and said opposing electrode, said cell including therein a passage of a solvent acting as a mobile phase, said passage having an inlet and an outlet and reaching said three electrodes, said passage causing said solvent to flow therethrough such that said solvent is contacted to each of said three electrodes; and
an electronic circuit connected to each of said three electrodes and including a potentiostat, an electric potential generating circuit and electric-field current measuring and amplifying circuit;
said electrochemical detector for liquid chromatography causing an oxidation reaction or a reduction reaction in a specimen caused to flow through said passage of said cell for analysis by an electrode process occurring on said working electrode, said electrochemical detector thereby analyzing said specimen by detecting a current flowing between said opposing electrode and said working electrode as a result of said oxidation or reduction reaction,
   wherein said reference electrode includes:
an electrode body;
a supporting member supporting said electrode body;
an inner sleeve formed of a material non-permeable against a liquid, said inner sleeve having an opening for mounting said supporting member therein and another, inner opening, said inner opening being closed by filling therein a carbon material, said inner sleeve accommodating and confining therein said electrode body supported on said supporting member together with a first electrolytic solution such that said electrode body and an outside of said inner sleeve are in electrical connection;
an outer sleeve formed of a material non-permeable against a liquid, said outer sleeve having an opening for mounting said supporting member therein and another, outer opening, said outer opening being closed by filling a carbon material therein, said outer sleeve accommodating and confining therein said electrode body supported on said supporting member together with a second electrolytic solution such that said electrode body and an outside of said outer sleeve are in electrical connection; and
an electronic circuit having a program function for periodically changing an electrical potential of said working electrode.

The invention according to claim 3 provides an electrochemical detector for liquid chromatography as claimed in claim 2, wherein the program function is held by an electric potential generating circuit, said electric potential generating circuit changing an electric potential of said working electrode periodically.

The invention according to claim 4 provides a liquid chromatograph, comprising:
at least one pump for sucking a solvent from an external reservoir and pumping out said solvent as a mobile phase through a feed tube that provides a feed path of said solvent;
a specimen injection apparatus constituting an injection port of a specimen for injecting said specimen into said solvent supplied by said pump, said specimen injection apparatus being operable automatically or manually;
at least one column supplied with said solvent for separating said specimen in said solvent into individual components as said specimen flows therethrough together with said solvent; and
a detector for detecting a status of separation of said specimen separated by said column,
   wherein said electrochemical detector for liquid chromatography as claimed in claim 3 is used for said detector.

The invention according to claim 5 provides a liquid chromatograph as claimed in claim 4, wherein said detector includes said electrochemical detector for liquid chromatography as claimed in claim 3 and a recorder for drawing a chromatogram representing a detected status of separation of said specimen, said liquid chromatograph further including a pH adjustment pump for sucking up a pH adjusting solution from an exterior of said liquid chromatograph and supplying thereto for adjusting a pH of said solvent constituting said mobile phase, said pH adjustment pump adjusting a pH of said specimen after a separation in said column to a desired value.

The invention according to claim 6 provides a method of analysis using a liquid chromatograph, said method comprising the steps of:
sucking, from a reservoir containing therein at least one solvent formed of an organic solvent and/or water added with an electrolyte, said solvent as a mobile phase by using at least one pump, and supplying said solvent to a feed tube acting as a passage of said solvent;
injecting and dissolving a specimen to be analyzed into said solvent supplied by said pump, by using a manually activated or automatically activated specimen injection device, said specimen injection device constituting an injection port for injecting said specimen into said solvent;
separating said specimen into individual components in a chromatograph column, as said specimen is caused to flow therethrough together with said solvent; and
detecting a status of separation of said specimen conducted in said chromatograph column by using an electrochemical detector for use in liquid chromatography,
said electrochemical detector forming a three-pole potentiostat including a reference electrode, a working electrode and an opposing electrode; said reference electrode constituting said three-pole potentiostat including: an electrode body; an inner sleeve protecting therein said electrode body; and an outer sleeve accommodating therein said inner sleeve, said inner sleeve accommodating therein said electrode body together with an electrolyte solution, said outer sleeve accommodating therein said inner sleeve together with an electrolyte solution, said reference electrode thereby having a dual structure in which said electrode body is protected double-fold by two electrolyte solution layers and two sleeves; said working electrode changing an electric potential thereof periodically according to a program function of an electronic circuit of said apparatus to which said working electrode is connected.

The invention according to claim 7 provides a method of analysis using a liquid chromatograph, wherein the method further includes the steps of: supplying a pH adjusting solution used for adjusting a pH value of said solvent acting as said mobile phase, to an interior of a part of said feed tube connecting said column and said electrochemical detector, by using at least one pH adjusting pump, which is a pump different from said pump used for supplying said solvent; conditioning, after said step of separation into individual components in said column, a pH value of said specimen to a desired pH value, said step of detection of status of separation of said specimen being conducted after said step of conditioning of said pH value of said specimen.

According to the invention of claims 1, 2 and 3, it is possible to double-protect the reference electrode by using the sleeve including inner and outer sleeves for confining the reference electrode.

It should be noted that both the inner sleeve and the outer sleeve have respective openings filled by a carbon material, and the inner sleeve accommodates therein an electrolytic solution together with the electrode body. Further, the outer sleeve accommodates, in the space between the outer sleeve and the inner sleeve, another electrolytic solution.

By filling the foregoing openings by the carbon material, the problem of penetration of the organic solvent from the outside environment, which may be the solvent used for the mobile phase and contacting with the reference electrode, is effectively eliminated while simultaneously maintaining a desired electrical contact with the outside environment. In other words, the function of the reference electrode is maintained even when such a construction is made.

Thus, the present invention provides a reference electrode in which the penetration of the organic solvent to the electrode body of the reference electrode is successfully eliminated, by using a double-protecting sleeve structure for protecting the penetration of the organic solvent from the mobile phase solvent, which constitutes the environment to which the reference electrode is contacted, without deteriorating the performance of the electrode.

Further, by using the programmable electric voltage generation circuit, it is possible to change the electric potential supplied to the working electrode, on which the electrode process is caused, by way of the electronic circuit such that the electric potential changes periodically.

Thus, the present invention enables a control of the electric potential of the working electrode such that the electric potential of the working electrode is held at a predetermined electrolytic potential level determined in correspondence to the electrochemical property of the specimen to be analyzed for a predetermined interval, and such that the electric potential of the working electrode is changed thereafter so as to avoid the adsorption of ionic impurities on the working electrode or such that the adsorbed impurities are desorbed from the working electrode.

As the foregoing change of the electric potential of the working electrode is under program control or caused periodically, it is easy to carry out the current detection only during the interval in which the working electrode is held at the desired electrolytic potential level. By carrying out the current detection at a desired moment determined in correspondence to the change of the electric potential for a desired duration, the problem caused in the current detection by the change of the state of the electrode is effectively eliminated.

From the foregoing, it will be understood that the present invention provides an electrochemical detector for liquid chromatography capable of suppressing the adversary effect, caused by the impurity ions, on the electrode process of the specimen taking place on the working electrode, by suppressing the adsorption of the impurity ions on the working electrode by way of changing the voltage including the polarity applied to the working electrode as desired, and wherein the penetration of the organic solvent to the electrode body is substantially suppressed by providing a double-protection structure to the electrode body of the reference electrode. As a result of the latter feature, the electrochemical detector of the present invention can be used for the liquid chromatography that uses a large amount of organic solvent for the mobile phase.

According to the invention pertinent to claims 4, 5, 6 and 7, the penetration of the organic solvent to the electrode body is substantially suppressed by providing a double-protection structure to the electrode body of the reference electrode. As a result of this construction, the electrochemical detector of the present invention can be used for the liquid chromatography that uses a large amount of organic solvent for the mobile phase.

Further, by changing the voltage applied to the working electrode surface of the electrochemical detector periodically or as desired, including the polarity of the voltage applied thereto, the adsorption of the impurity ions on the working electrode is effectively suppressed, and the adversary effect on the electrode process of the specimen taking place on the working electrode is effectively suppressed.

As a result of this construction, the electrochemical detector of the present invention can be used for the liquid chromatography that uses a large amount of organic solvent for the mobile phase, and a high resolution separation is achieved in the column. By using the electrochemical detector of the present invention, a high-sensitivity liquid chromatograph is obtained. Further, by using such a liquid chromatograph, a high-sensitivity analysis of the specimen becomes possible.

### BRIEF DESCRIPTION OF THE DRAWINGS

FIG.1 is a diagram showing the construction of an electrochemical detector for liquid chromatography according to an embodiment of the present invention;
FIG.2 is a diagram showing the construction of a reference electrode used in the electrochemical detector for liquid chromatography according to the embodiment of the present invention in an exploded perspective view;
FIG.3 is a diagram showing the construction of a cell used in the electrochemical detector for liquid chromatography according to the embodiment of the present invention in an exploded perspective view;
FIG.4 is a diagram showing the overall construction of a liquid chromatograph according to the embodiment of the present invention;
FIG.5 is a diagram showing the specimen and a structure used for analysis; and
FIG.6 is a diagram showing the chromatograph obtained according to the embodiment of the present invention in comparison with a chromatogram obtained by an absorptiometry.

### BEST MODE FOR IMPLEMENTING THE INVENTION

Hereinafter, embodiments of the present invention will be described with reference to the drawings.

First, a description will be made on an electrochemical detector for liquid chromatography according to an embodiment of the present invention.

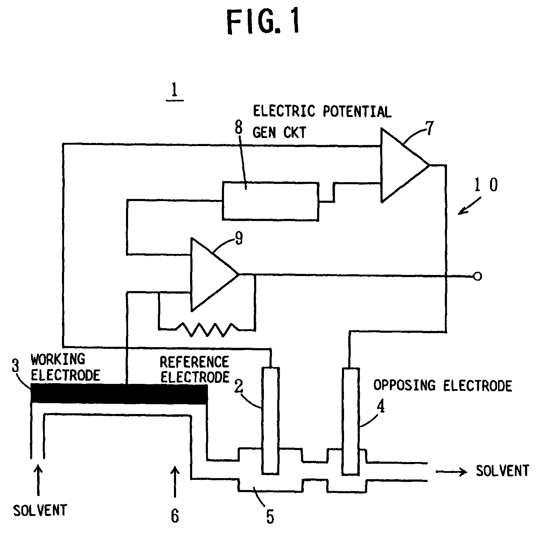

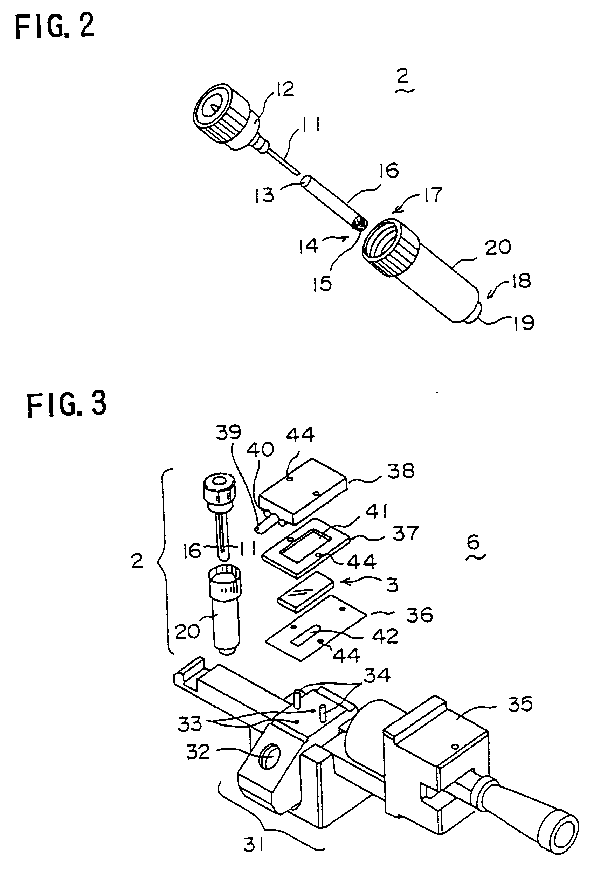

FIG.1 shows the general construction of the electrochemical detector for liquid chromatography according to the embodiment of the present invention. Further, FIG.2 shows the construction of a reference electrode for use in the electrochemical detector for liquid chromatography according to the embodiment of the present invention in an exploded perspective view.

Referring to the drawings, an electrochemical detector 1 for liquid chromatography according to the embodiment of the present invention includes: a reference electrode 2 used as a reference of electrode potential; a working electrode 3 acting directly on a substance subjected to electrolysis; an opposing electrode 4 assisting an electrolysis reaction; a cell 6 supporting each of the three electrodes, in other words, the reference electrode 2, the working electrode 3 and the opposing electrode 4, the cell 6 including therein an inner space 5 having openings at both end thereof as an inlet and an outlet of a solvent used for a mobile phase, the inner space 5 extending and reaching the foregoing three electrodes (2,3,4) and interconnecting the three electrodes (2,3,4) with each other, the solvent in the space thereby causing a contact with the three electrodes (2,3,4); and an electronic circuit 10 connected to each of the three electrodes (2,3,4), the electronic circuit 10 including therein a potentiostat 7, an electric potential generating circuit 8 and an electric-field current measurement and amplifying circuit 9.

In the electrochemical detector 1 of FIG.1, the specimen flowing through the inner space 5 of the cell 6 together with the solvent is oxidized or reduced by the electrode process occurring on the working electrode 3, and the analysis of the specimen is achieved by detecting the electric current caused to flow between the opposing electrode 4 and the working electrode as a result of the oxidation or reduction reaction.

In this electrochemical detector 1, it should be noted that the reference electrode 2 includes: an electrode body 11; a support member 12 supporting the electrode body 11; an inner sleeve 16 of a material non-permeable to a liquid, the inner sleeve 16 having a mounting opening 13 for mounting the support member 12 thereon and another, inner opening 14, the inner opening 14 being closed by filling therein a carbon material 15, the inner sleeve 16 accommodating therein the electrode body 11 together with a first electrolytic solution confined between the support member 12 and the inner sleeve 16 while maintaining an electrical conduction between the electrode body 11 and the sleeve exterior; and an outer sleeve 20 of a material non-permeable to a liquid, the outer sleeve 17 having a mounting opening 17 for mounting the support member 12 thereon and another, outer opening 18, the outer opening 18 being closed by filling therein a carbon material 19, the outer sleeve 20 accommodating therein the inner sleeve 16 in which the electrode body 11 is accommodated, together with a second electrolytic solution confined between the support member 12 and the outer sleeve 20 while maintaining an electrical conduction between the electrode body 11 and the sleeve exterior.

In the foregoing construction, mercury (I) chloride is used for the electrode body 11, together with a potassium chloride solution for the first electrolytic solution, which is confined in the inner sleeve 16 together with the electrode body 11, wherein the potassium chloride solution is saturated with silver chloride (concentration of 3.3 mol/liter). Further, a potassium chloride solution (concentration of 3.3 mol/liter) is used for the second electrolytic solution confined in the outer sleeve 20 together with the inner sleeve 16.

Further, it should be noted that any material forming the inner sleeve 16 and the outer sleeve 20 may be used as long as the material is non-conductive, capable of retaining aqueous solution therein, stable against electrolytic solutions even when exposed for a long duration, and does not release impurities into the electrolytic solution confined therein or into the organic solvent which contacts the reference electrode 2 as a mobile phase.

In the present embodiment, the inner sleeve 16 may be formed of a copolymer of 4-ethylene fluoride and 6-propylene fluoride. On the other hand, 3-ethylene fluoride may be used for the outer sleeve 20.

Further, it should be noted that the electronic circuit 10 has a programmable function in the electric potential generating circuit 8 and is cable of changing the electric potential of the working electrode 3 periodically. In other words, the electric potential generating circuit 8 enables a change of the electric potential of the working electrode 3 periodically.

In the present embodiment, it is programmed such that the application of the voltage to the working electrode is achieved in the form of a pulse, such that the electric potential of the working electrode 3 is maintained at a desired level for a desired duration, followed by a reversal of the polarity of the pulse. Thereby, the reversed pulse is applied for the same duration, and the foregoing process is repeated. In an example, the pulse is applied with a frequency of about 1 Hz (one cycle of positive and negative voltage change occurs in 1 second), and the detection of the current for the specimen analysis is conducted only during the interval in which the working electrode 3 is maintained at the desired electric potential.

Further, it should be noted that the pulse frequency of the voltage applied to the working electrode 3 is not limited to 1 Hz but may be changed as necessary depending on the property of the specimen to be analyzed.

FIG.3 shows the construction of the cell used in the electrochemical detector for liquid chromatography according to the embodiment of the present invention in an exploded perspective view, wherein FIG.3 represents the reference electrode and the inner space constituting the passage of the solvent or mobile phase.

Referring to FIG.3, the cell 6 includes: a hollow cell block 31 of a metal, the cell block 31 including an opening 32 for mounting the reference electrode 2, a pair of openings 33 used for the inlet and outlet of the solvent, and a pair of alignment projections 34; a mounting part 35 for mounting the block 31 inside the electrochemical detector 1; a cell spacer 36 of a non-conductive resin; the working electrode 3; a cell guide 37; and an electrode presser 38 having an insulating seat 39 and a terminal 40, wherein the electrode presser 38 is used for holding the working electrode 3.

The reference electrode 2 is inserted into the opening 32 and fixed upon the cell block 31.

The cell spacer 36, the cell guide 37 and the electrode presser 38 are mounted on the cell block 31 in alignment with each other in the order of the cell spacer 36, the cell guide 38 and the electrode suppressor 39, by engaging alignment holes 44 formed on each of these members with the alignment projections 34 on the cell block 31.

The working electrode 3 is formed of gold and is fitted into a guide part 41 formed in the cell guide 37, wherein the working electrode 3 is fixed between the cell spacer 34 and the electrode presser 39. In this state, it should be noted that the terminals on the electrode presser 39 are engaged with the working electrode 3 and provides an external electrical connection to the working electrode 3.

It should be noted that the material for the working electrode 3 is not limited to gold but other materials such as platinum or glassy carbon may also be used.

The cell spacer 34 has an opening 42 in the part corresponding to the working electrode 3 such that the opening 42 aligns with the opening 32 used for feeding the liquid, wherein it should be noted that there is formed a space between the working electrode 3 and the outer surface of the cell block 31 when the cell spacer 34 is mounted on the cell block 31 in such a state that the foregoing opening 42 aligns with the opening 32 for the liquid and the cell guide 38 is mounted on the cell spacer 34 in the state that the working electrode 3 is fitted into the opening 42 and further that the electrode suppressor 39 is mounted on the cell guide 38.

The space thus formed constitutes a part of the inner space used for transporting the solvent, the solvent acting as the mobile phase and flowing through the opening 33, wherein the space thus formed enables a contact between the solvent in the space and the working electrode 3. Thereby, the electrode process on the working electrode 3, which is used for the analysis of the specimen, is enabled.

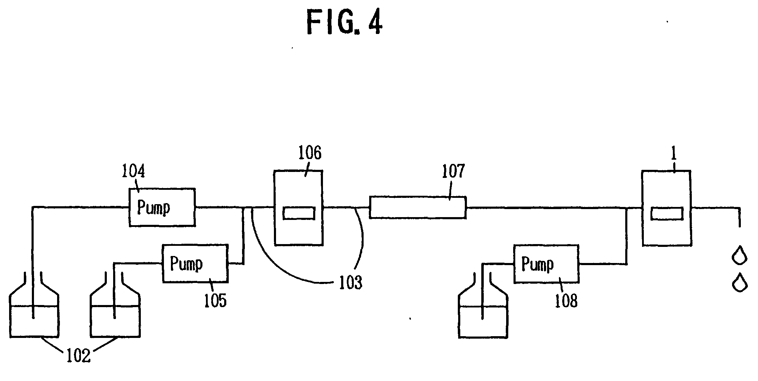

Thus, it is desired to choose a material for the cell block 31 such that the cell block 31 is not deteriorated under acidic condition or alkaline condition. In view of the fact that a conductive part of the cell block 31 is used for the opposing electrode 4 (not specified in FIG.4), it is desirable to use a metal stable against acids or alkalis for the cell block 31.

Next, the construction of the liquid chromatograph according to the present embodiment as well as the chemical analysis achieved by such a liquid chromatograph will be described.

FIG.4 shows a general construction of the liquid chromatograph 101 according to an embodiment of the present invention.

Referring to FIG.4, it should be noted that the liquid chromatograph 101 includes: pumps 104 and 105 sucking a solvent from external reservoirs 102 and feeding the solvent through a supply tube 103 as a mobile phase; an automatic or manually controllable specimen injection device 106 constituting an injection port of the liquid chromatograph for injecting a specimen into the solvent supplied by the pumps 104 and 105; a liquid chromatograph column 107 separating the specimen in the solvent thus supplied thereto into individual components as the specimen is caused to flow therethrough with the solvent; and a detector for detecting the status of separation of the specimen separated by the column 107. Thereby, the present invention uses the foregoing electrochemical detector 1 for liquid chromatography and a recorder (not illustrated) for the detection of the separation of the specimen.

For the liquid chromatograph column 107, it is possible to use chemically bonded packings including a silica gel or a silica gel having a chemically modified surface in which octadecyl silanes, octyl silanes, amino groups, cyano groups, phenyl groups, naphtyl groups, and the like, are bonded thereto. Alternatively, it is possible to use a packing material of porous polymers. Further, it is possible to use a column filled with an ion-exchange resin, in which ion-exchange functional groups such as sulfonic acid groups or quarternary ammonium groups, are introduced.

Further, in order to adjust the pH of the solvent used for the mobile phase, the liquid chromatograph 101 of FIG.4 includes an additional pump 108 for pH adjustment, wherein the additional pump 108 sucks up a pH-adjusting solution provided separately from the liquid chromatograph 101 and supplies the same to the supply tube 103 connecting the column 107 and the electrochemical detector 1. By using the additional pump 108, it becomes possible to set the pH value of the specimen to a desired value after the separation in the column 107. Thereby, the detection of the status of separation of the specimen can be conducted in the state that the pH value of the specimen is conditioned as desired.

Of course, the pH-adjusting pump 108 can be omitted in the case where there is no need for such a conditioning or adjustment of the pH value. In such a case, it is not necessary to provide the additional pH-adjusting solution.

In the present invention, it should be noted that there are two reservoirs 102, wherein one of the reservoirs 102 contains water while the other contains a different solvent such as an organic solvent. The mobile phase is thereby formed by sucking up the water and the organic solvent from the two reservoirs 102 by activating the two pumps 104 and 105 and mixing the two solvents thus sucked up in the supply tube 103. In the construction of FIG.4, it should be noted that the ratio of the solvents in the mobile phase can be changed during the liquid chromatography conducted by the liquid chromatograph 101 by changing the pumping pressures of the pumps 104 and 105 with respect to each other.

The number of the solvents in the mobile phase is by no means limited to two, but it is possible to use only one solvent or three or more solvents in the mobile phase. The number of the pumps is determined according to the number of the solvents in the mobile phase or the number of the reservoirs.

Next, an evaluation on the effect of the liquid chromatograph according to the embodiment of the present invention was made by carrying out an analysis of specimen.

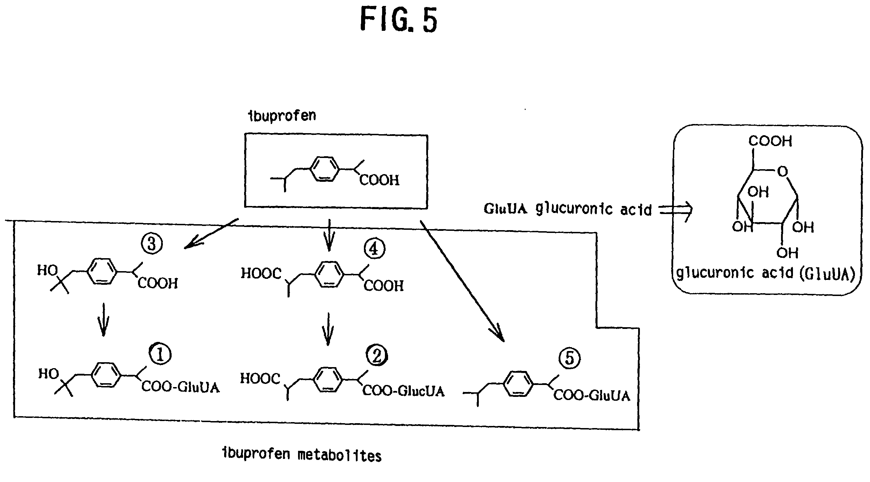

FIG.5 shows the specimen used for the evaluation as well as the structure thereof.

The sample used for the analysis is a urine ibuprofen metabolite and includes five different metabolites as indicated in FIG.5 as (1) - (5). While these five metabolies have a similar structure, it should be noted that the metabolites (1), (2) and (5) contain a glucuronic acid, a sugar, in the molecule as a conjugate.

Under a basic environment, a sugar such as a glucuronic acid causes a dissociation of hydrogen ions and forms an anion. Thereby, an electrochemical activity sufficient for ordinary electrochemical analysis is realized.

Thus, the metabolites (1), (2) and (5) have an electrochemical activity under a basic condition due to the effect of the glucuronic acid contained in the molecules as a sugar, while the metabolites (3) and (4), which do not contain the glucuronic acid in the molecules do not show the electrochemical activity.

All of these metabolites, on the other hand, have a benzene ring in the molecule due to the ibuprofen structure thereof, and thus, it is possible to achieve an absorptiometry for all of these metabolites.

Thus, all the ibuprofen metabolites (1) - (5) are detected when the absorptiometry is conducted by using a ultraviolet radiation, while the electrochemical detector detects only the metabolites (1), (2) and (5) selectively.

Thus, by conducting the electrochemical analysis, it is possible to detect only the electrochemically active substance such as a sugar, with high selectivity and high sensitivity, but without being obstructed by electrochemically inactive components, which have a similar structure and contained in the complex specimen mixture. Thereby, a very accurate information is obtained about the sugar contained in the specimen by conducting the liquid chromatography of the present invention.

The following is an example of the condition used in the foregoing analysis of the ibuprofen metabolite.

In the experiment, water and acetonitrile are used for the solvent, wherein the water and the acetonitrile are held in separate reservoirs and sucked up by using separate pumps to form the mobile phase. Thereby, the mixing ratio is controlled such that the proportion of the acetonitrile component increases gradually with a predetermined speed during the analysis.

The solvent thus formed of water and acetonitrile and acting as the mobile phase is further added with potassium dihydrogen phosphate as an electrolyte, with a controlled amount such that the concentration of potassium dihydrogen phosphate in the solvent becomes 50 mmol/liter. Further, the pH of the solvent is adjusted to be acidic (pH of 2.45) in order to suppress the dissociation of the hydrogen ion in the carboxyl group of the ibuprofen derivatives (1) - (5) and in order to achieve a complete separation in the column.

In the experiment, a column designed for reversed phase liquid chromatography having an inner diameter of 1.5 mm and a length of 250 mm (CAPCELL PAK C18 UG120) was used, wherein the column was maintained at 40°C during the separation process.

After the separation of the ibuprofen derivatives (1) - (5), the pH of the solvent used for the mobile phase was set to the pH value of 13, by using a 0.6N sodium hydroxide solution as the solution for pH conditioning. As a result of the pH adjustment, the components to be analyzed are anionized.

For the purpose of comparison, the foregoing result of the present embodiment is compared with the absorptiometric analysis which was conducted on the mobile phase after the separation in the column but before the foregoing pH adjustment. It should be noted that the absorptiometric analysis was conducted by using a ultraviolet radiation of 210 nm wavelength in combination with an absorptiometer.

Next, the result of analysis of ibuprofen metabolite will be explained with reference to the chromatogram thereof.

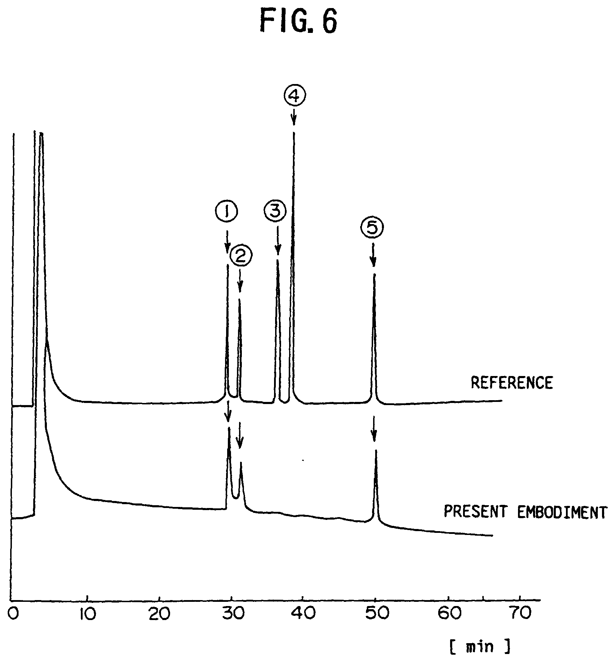

FIG.6 shows the chromatogram obtained by the embodiment of the present invention in comparison with the chromatogram obtained by the absorptiometry.

Referring to FIG.6, it will be noted that only the glucuronic acid conjugates of the five urine ibuprofen metabolites are selectively detected when the electrochemical detector for liquid chromatography of the present invention is used, and that there is no disturbance in the baseline.

From the foregoing result, it was confirmed that the present invention can selectively detect, when analyzing a sugar or a substance forming a conjugate with the sugar and contained in a specimen, the target substance, which is the sugar or the sugar conjugate, selectively by conducting a separation process by using an optimum solvent such as an organic solvent for the separation process, and an accurate analysis becomes possible even in such a case in which the specimen contains various components other than sugar.

## Claims

1. An electrochemical detector (1) for liquid chromatograph, said electrochemical detector forming a three-pole potentiostat including a reference electrode (2), a working electrode (3) and an opposing electrode (4),
said reference electrode (2) constituting said three-pole potentiostat including: an electrode body (11); an inner sleeve (16) protecting therein said electrode body; and an outer sleeve (20) accommodating therein said inner sleeve, said inner sleeve (16) accommodating therein said electrode body (11) together with an electrolyte solution, said outer sleeve (20) accommodating therein said inner sleeve (16) together with an electrolyte solution, said reference electrode (2) thereby having a dual structure in which said electrode body (11) is protected double-fold by two electrolyte solution layers and two sleeves;
said working electrode (3) changing an electric potential thereof periodically according to a program function of an electronic circuit (10) of said apparatus to which said working electrode is connected.

2. An electrochemical detector (1) for liquid chromatography, comprising:
a reference electrode (2) providing a reference electrode potential;
a working electrode (3) acting directly on a substance subjected to an electrolytic reaction;
an opposing electrode (4) assisting said electrolytic reaction;
a cell supporting (6) thereon said reference electrode (3), said working electrode (3) and said opposing electrode (4), said cell including therein a passage (5) of a solvent acting as a mobile phase, said passage having an inlet and an outlet and reaching said three electrodes (2, 3, 4), said passage causing said solvent to flow therethrough such that said solvent is contacted to each of said three electrodes (2, 3, 4); and
an electronic circuit (10) connected to each of said three electrodes (2, 3, 4) and including a potentiostat (7), an electric potential generating circuit (8) and electric-field current measuring and amplifying circuit (9);
said electrochemical detector (1) for liquid chromatography causing an oxidation reaction or a reduction reaction in a specimen caused to flow through said passage (5) of said cell (6) for analysis by an electrode process occurring on said working electrode (3), said electrochemical detector thereby analyzing said specimen by detecting a current flowing between said opposing electrode (4) and said working electrode (3) as a result of said oxidation or reduction reaction,
wherein said reference electrode (2) includes:
an electrode body (11);
a supporting member (12) supporting said electrode body;
an inner sleeve (16) formed of a material non-permeable against a liquid, said inner sleeve (16) having an opening (13) for mounting said supporting member (12) therein and another, inner opening (14), said inner opening (14) being closed by filling therein a carbon material, said inner sleeve accommodating and confining therein said electrode body (11) supported on said supporting member (12) together with a first electrolytic solution such that said electrode body (11) and an outside of said inner sleeve (16) are in electrical connection;
an outer sleeve (20) formed of a material non-permeable against a liquid, said outer sleeve (20) having an opening (17) for mounting said supporting member (12) therein and another, outer opening (18), said outer opening (18) being closed by filling a carbon material (19) therein, said outer sleeve (20) accommodating and confining therein said electrode body (11) supported on said supporting member (12) together with a second electrolytic solution such that said electrode body (11) and an outside of said outer sleeve (20) are in electrical connection; and
an electronic circuit (10) having a program function for periodically changing an electrical potential of said working electrode.

3. An electrochemical detector for liquid chromatography as claimed in claim 2, wherein the program function is held by an electric potential generating circuit (8), said electric potential generating circuit (8) changing an electric potential of said working electrode (3) periodically.

4. A liquid chromatograph (101), comprising:
at least one pump (104, 105) for sucking a solvent from an external reservoir (102) and pumping out said solvent as a mobile phase through a feed tube (103) that provides a feed path of said solvent;
a specimen injection apparatus (106) constituting an injection port of a specimen for injecting said specimen into said solvent supplied by said pump (104, 105), said specimen injection apparatus being operable automatically or manually;
at least one column (107) supplied with said solvent for separating said specimen in said solvent into individual components as said specimen flows therethrough together with said solvent; and
a detector for detecting a status of separation of said specimen separated by said column,
wherein said electrochemical detector (1) for liquid chromatography as claimed in claim 3 is used for said detector.

5. A liquid chromatograph as claimed in claim 4, wherein said detector includes said electrochemical detector (1) for liquid chromatography as claimed in claim 3 and a recorder for drawing a chromatogram representing a detected status of separation of said specimen,
said liquid chromatograph further including a pH adjustment pump (108) for sucking up a pH adjusting solution from an exterior of said liquid chromatograph (101) and supplying thereto for adjusting a pH of said solvent constituting said mobile phase, said pH adjustment pump (108) adjusting a pH of said specimen after a separation in said column (107) to a desired value.

6. A method of analysis using a liquid chromatograph, said method comprising the steps of:
sucking, from a reservoir (102) containing therein at least one solvent formed of an organic solvent and/or water added with an electrolyte, said solvent as a mobile phase by using at least one pump (104, 105), and supplying said solvent to a feed tube (103) acting as a passage of said solvent;
injecting and dissolving a specimen to be analyzed into said solvent supplied by said pump (104, 105), by using a manually activated or automatically activated specimen injection device (106), said specimen injection device constituting an injection port for injecting said specimen into said solvent;
separating said specimen into individual components in a chromatograph column (107), as said specimen is caused to flow therethrough together with said solvent; and
detecting a status of separation of said specimen conducted in said chromatograph column (107) by using an electrochemical detector (1) for use in liquid chromatography,
said electrochemical detector (1) forming a three-pole potentiostat including a reference electrode (2), a working electrode (3) and an opposing electrode (4); said reference electrode (2) constituting said three-pole potentiostat including: an electrode body (11); an inner sleeve (16) protecting therein said electrode body (11); and an outer sleeve (20) accommodating therein said inner sleeve (16), said inner sleeve (16) accommodating therein said electrode body (11) together with an electrolyte solution, said outer sleeve (20) accommodating therein said inner sleeve (16) together with an electrolyte solution, said reference electrode (2) thereby having a dual structure in which said electrode body (11) is protected double-fold by two electrolyte solution layers and two sleeves; said working electrode (3) changing an electric potential thereof periodically according to a program function of an electronic circuit (10) of said apparatus to which said working electrode is connected.

7. A method as claimed in claim 6, wherein the method further includes the steps of: supplying a pH adjusting solution used for adjusting a pH value of said solvent acting as said mobile phase, to an interior of a part of said feed tube (103) connecting said column (107) and said electrochemical detector (1), by using at least one pH adjusting pump (108), which is a pump different from said pump used for supplying said solvent; conditioning, after said step of separation into individual components in said column (107), a pH value of said specimen to a desired pH value, said step of detection of status of separation of said specimen being conducted by said electrochemical detector (2) after said step of conditioning of said pH value of said specimen.
